# EUROPEAN PATENT SPECIFICATION

(11) **EP 0 559 150 B1**
(45) Date of publication and mention of the grant of the patent: **29.12.1997**
(21) Application number: 93103308.8
(22) Date of filing: 02.03.1993
(51) Int. Cl.: C08L 13/02, C08F 236/12, C08F 4/40

(54) **Copolymer latex, method for preparing the same and use thereof**
Copolymerlatex, Verfahren zu dessen Herstellung sowie dessen Verwendung
Latex d'un copolymère, son procédé de préparation et son utilisation

(30) Priority: 03.03.1992 JP 80357/92; 22.12.1992 JP 356523/92
(43) Date of publication of application: 08.09.1993
(73) Proprietor: NIPPON ZEON CO., LTD., Tokyo (JP)
(72) Inventor: Ozawa, Yutaka, Tokyo (JP); Ohta, Hisanori, Tokyo (JP)
(74) Representative: Kraus, Walter, Dr.

(56) References cited:
- US-A- 4 102 844
- DATABASE WPI Section Ch, Week 0575, Derwent Publications Ltd., London, GB; Class A, AN 75-08380W & JP-A-49 113 891 (JAPAN ZEON CO) 30 October 1974
- CHEMICAL ABSTRACTS, vol. 85, no. 16, 1976, Columbus, Ohio, US; abstract no. 109740x, BASOV B.K. ET AL. 'Synthesis and properties of latex SKN-40-1GP stabilized by sodium alkanesulfonate'
- CHEMICAL ABSTRACTS, vol. 96, no. 26, 1982, Columbus, Ohio, US; abstract no. 219041e, JARM V. ET AL 'Emulsion copolymerization of styrene and butadiene to higher degrees of conversion'

## Description

The present invention relates to a method for preparing a copolymer latex. More particularly the present invention relates to the preparation of a copolymer latex having high oil resistance and high mechanical strength as well as soft drape.

Carboxyl-modified nitrile/diene copolymer latexes are widely used for preparing paints, foamed rubber, adhesives, dip-molded products and so on.

The carboxyl-modified nitrile/diene copolymer latexes have increased oil resistance whereas they have decreased impact resilience and harder drape according as the content of nitrile increases. On the contrary, with decreasing nitrile content, the latex has softer drape and decreased oil resistance and decreased mechanical strength.

It is desired to balance softness of drape with mechanical strength and oil resistance, which are conflicting each other and increase the levels of these characteristics.

To meet this desire, there has been proposed, for example, a method in which a carboxyl-modified nitrile/diene copolymer latex and a natural rubber latex are laminated alternately one on another for molding. As another proposal, a method has been known in which a mixed latex composed of a carboxyl-modified nitrile/diene copolymer latex and a carboxyl-modified polyisoprene rubber latex (Japanese Patent Application Laid-Open No. 101036/1978).

However, these method are disadvantageous in that not only they require use of a copolymer latex which has a soft drape but also they give products having insufficient characteristics such as oil resistance, mechanical strength, and drape. Hence there has been a keen desire for a latex of a single carboxyl-modified nitrile/diene copolymer which latex has high oil resistance and high mechanical strength as well as soft drape.

The mechanical strength and softness of drape of a copolymer depends on the branching structure of the copolymer. Incidentally, carboxyl-modified nitrile/diene copolymers prepared by conventional methods contain many branches in structure and the content of methyl ethyl ketone insoluble matter is large. In particular, increase in the content of nitrile results in increase in the amount of the methyl ethyl ketone insoluble matter.

In order to decrease the amount of methyl ethyl ketone insoluble matter, a method has been proposed which performs polymerization with adding a large amount of a chain transfer agent to starting monomers. This method is also disadvantageous since sometimes it gives rise to a copolymer having a low molecular weight, or the activity of the polymerization initiator is lost during polymerization to suppress the polymerization conversion at a lower level. Thus, it has been difficult to obtain a carboxyl-modified nitrile/diene copolymer latex having a high molecular weight, a low content of methyl ethyl ketone insoluble matter, and a high content of nitrile.

US-A-4 102 844 relates to a dipped article produced by the process which comprises dipping a mould in a coagulant and then in a rubber latex to thereby form a film of precipitated rubber on the surface of the coagulant coated mould and subsequently vulcanizing said precipitated rubber to form a dipped article, said rubber latex having an average rubber particle diameter of up to 200 nm, a solids content of 35 to 60 % by weight, and a Defo value of less than 2,000 and having been prepared by polymerizing a monomer mixture consisting of
(a) 85 to 50 parts by weight of at least one member selected from the group consisting of butadiene and isoprene,
(b) 10 to 40 parts by weight of acrylonitrile or methacrylonitrile,
(c) 0 to 40 parts by weight of styrene,
(d) 0 to 10 parts by weight of at least one member selected from the group consisting of acrylamide, methacrylamide and their methylol derivatives and
(e) 0.1 to 10 parts by weight of an α,β-unsaturated carboxylic acid, in aqueous emulsion in the presence of
   (i) 0.5 to 6.0 % by weight, based on the monomer mixture weight, of an alkarylsulphonate and
   (ii) 0 to 5 % by weight, based on the monomer mixture weight, of at least one surface active substance, at a pH below 7 and then adding on completion of polymerization of said monomer mixture, alkali metal hydroxide to adjust the pH to above 8.

JP-A-49 113 891 describes the emulsion-polymerization of monomers containing at least 30 wt.% conjugated dienes in the presence of redox catalysts mixed with 0.1-2 wt.% C₁₋₁₂ aliphatic, aromatic, or alicyclic hydrocarbons nitrites.

Thus, US-A-4 102 844 and JP-A-49 113 891 disclose copolymer latices produced by polymerization using a tertiary butyl hydroperoxide or a para-menthane hydroperoxide, and a para-menthane hydroperoxide, respectively. However, a molded product obtained from such a copolymer latex shows inferior properties with regard to mechanical strength and softness of drape than molded products obtained from copolymer latices of the present invention.

It is the object of the present invention to provide a method for preparing a carboxyl-modified nitrile-diene copolymer latex having a high content of nitrile, a high molecular weight, and a low content of methyl ethyl ketone insoluble matter.

The present inventors have found that emulsion polymerization of an ethylenically unsaturated nitrile monomer, an ethylenically unsaturated acid monomer and a conjugated diene monomer using as a polymerization initiator a specified peroxide and a reducing agent can produce a carboxyl-modified nitrile/diene copolymer latex having a high molecular weight and a low content of methyl ethyl ketone insoluble matter.

According to the present invention, there is provided a method for preparing a copolymer latex, comprising the step of emulsion polymerizing 30 to 90 % by weight of a conjugated diene monomer, 9 to 50 % by weight of an ethylenically unsaturated nitrile monomer, 0.1 to 20 % by weight of an ethylenically unsaturated acid monomer, and 0 to 20 % by weight of another ethylenically unsaturated monomer copolymerizable therewith using 1,1,3,3-tetramethylbutyl hydroperoxide and a reducing agent.

Hereinafter, the present invention will be described in detail.

The latex is a copolymer latex comprising a conjugated diene monomer unit, an ethylenically unsaturated nitrile monomer unit, an ethylenically unsaturated acid monomer unit, and an other ethylenically unsaturated monomer unit copolymerizable therewith.

As the ethylenically unsaturated nitrile monomer, there can be cited, for example, acrylonitrile, methacrylonitrile, fumaronitrile, α-chloroacrylonitrile and α-cyanoethylacrylonitrile. These ethylenically unsaturated nitrile monomers may be used singly or two or more of them may be used in combination.

The amount of the ethylenically unsaturated nitrile monomer unit is 9 to 50 % by weight, preferably 20 to 45 % by weight, and more preferably 30 to 45 % by weight, of total monomer unit in the copolymer. If the amount of this unit is less than 9 % by weight, the oil resistance of the resulting copolymer is aggravated while if it exceeds 50 % by weight, the drape of the copolymer becomes harder.

The latex is featured by high molecular weight and low content of methyl ethyl ketone insoluble matter despite increased amount of ethylenically unsaturated nitrile monomer unit.

In the latex the polystyrene converted weight average molecular weight (hereinafter referred to simply as "molecular weight") of the copolymer is within the range of 50,000 to 500,000, and preferably 80,000 to 200,000. If the molecular weight is smaller than 50,000, the tensile strength of the copolymer is low and cracks tend to occur. On the other hand, if the molecular weight is larger than 500,000, the drape of the copolymer becomes hard, and shrinkage tends to occur at the time of molding.

In the latex the content of methyl ethyl ketone insoluble matter (hereinafter referred to as "MEK insoluble matter") is 45 % by weight or less, preferably 25 % by weight or less, and more preferably 10 % by weight or less. The content of more than 45 % by weight is undesirable since the drape of the copolymer becomes hard.

As the conjugated diene, there can be used, for example, 1,3-butadiene, isoprene, 2,3-dimethyl-1,3-butadiene, 2-ethyl-1,3-butadiene, 1,3-pentadiene and chloroprene. In particular, 1,3-butadiene or isoprene is used preferably. These conjugated diene monomers may be used singly or two or more of them may be used in combination.

The amount of the conjugated diene monomer unit is 30 to 90 % by weight, and preferably 35 to 80 % by weight, of total monomer units. If this amount is less than 30 % by weight, the drape of the copolymer becomes hard while it is undesirable for this amount to exceed 90 % by weight since the oil resistance of the copolymer is aggravated and tensile strength and tear strength decrease.

The ethylenically unsaturated acid monomer is not limited particularly so far as it is an ethylenically unsaturated monomer containing an acid group such as a carboxyl group, a sulfonic acid group, or an acid anhydride group. There can be used, for example, ethylenically unsaturated carboxylic acids such as acrylic acid, methacrylic acid, itaconic acid, maleic acid, and fumaric acid; polycarboxylic acid anhydrides such as maleic anhydride, and citraconic anhydride; ethylenically unsaturated sulfonic acids such as styrenesulfonic acid; ethylenically unsaturated polycarboxylic acid monoesters such as monobutyl fumarate, monobytyl maleate, and mono-2-hydroxypropyl maleate. These ethylenically unsaturated acid monomers may be used as alkali metal salts or ammonium salts. These ethylenically unsaturated acid monomers may be used singly or two or more of them may be use in combination.

The amount of the ethylenically unsaturated acid monomer unit is 0.1 to 20 % by weight, preferably 1 to 15 % by weight, and more preferably 2 to 10 % by weight, of total monomer units. If this amount is less than 0.1 % by weight, the tensile strength of the copolymer decreases while it exceeds 20 % by weight, the tear strength of the copolymer decreases and the drape becomes hard.

As the other ethylenically unsaturated monomer copolymerizable with the conjugated diene monomer, the ethylenically unsaturated nitrile monomer and the ethylenically unsaturated acid monomer, there can be cited, for example, aromatic vinyls such as styrene, alkylstyrenes, and vinylnaphthalene; fluoroalkyl vinyl ethers such as fluoroethyl vinyl ether; ethylenically unsaturated amides such as (meth)acrylamide, N-methylol(meth)acrylamide, N,N-dimethylol(meth)acrylamide, N-methoxymethyl(meth)acrylamide, N-propoxymethyl(meth)acrylamide; vinylpyridines; vinylnorbornene; unconjugated dienes such as dicyclopentadiene, and 1,4-hexadiene; ethylenically unsaturated carboxylic acid esters such as methyl (meth)acrylate, methyl (meth)acrylate, butyl (meth)acrylate, 2-ethylhexyl (meth)acrylate, trifluoroethyl (meth)acrylate, tetrafluoropropyl (meth)acrylate, dibutyl maleate, dibutyl fumarate, diethyl maleate, methoxymethyl (meth)acrylate, ethoxyethyl, (meth)acrylate, methoxyethoxyethyl (meth)acrylate, cyanomethyl (meth)acrylate, 2-cyanoethyl (meth)acrylate, 1-cyanopropyl (meth)acrylate, 2-ethyl-6-cyanohexyl (meth)acrylate, 3-cyanopropyl (meth)acrylate, hydroxyehtyl (meth)acrylate, hydroxypropyl (meth)acrylate, glycidyl (meth)acrylate, and dimethylaminoetyl (meth)acrylate. These ethylenically unsaturated monomers may be used singly or two or more of them may be used in combination.

The amount of these ethylenically unsaturated monomer unit is 20 % by weight or less of total monomer unit in the copolymer.

The method for preparing a latex according to the present invention is featured by emulsion polymerization of an ethylenically unsaturated nitrile monomer, a conjugated diene monomer, an ethylenically unsaturated acid monomer, and an ethylenically unsaturated monomer copolymerizable with these monomers using a specified polymerization initiator.

The polymerization initiator used in the present invention consists of a specified peroxide and a reducing agent.

The peroxide used in the present invention is is 1,1,3,3-tetramethylbutyl hydroperoxide; having a decomposition temperature of 153°C.

Using 1,1,3,3-tetramethylbutyl hydroperoxide; latexes can be prepared stably therewith and dip products can be obtained which have high mechanical strength and soft drape. The amount of 1,1,3,3-tetramethylbutyl hydroperoxide may vary depending on its kind and preferably it is 0.001 to 0.6 % by weight of total monomers.

The reducing agent is not limited particularly so far as it is a reducing agent usually used in redox polymerization initiators. As such a reducing agent, there can be cited, for example, compounds having metal ions in a reduced state such as ferric sulfate, and copper naphthenate; amine such as dimethylaniline; and so on. These may be used singly or two or more of them may be used in combination.

Proportion of 1,1,3,3-tetramethylbutyl hydroperoxide to the reducing agent used in the present invention may vary slightly depending on the kind of the reducing agent used, and generally a proportion of 1,1,3,3-tetramethylbutyl hydroperoxide/reducing agent is 0.1 to 30, preferably 0.3 to 20.

The emulsifying agent used in the present invention may be any one that is usually used in emulsion polymerization. There can be cited, for example, nonionic emulsifying agents such as polyoxyethylene alkyl ether, polyoxyethylene alkylphenol ether, polyoxyethylene alkyl ester, and polyoxyethylene sorbitan alkyl ester; anionic emulsifying agents such as fatty acids, e.g., myristic acid, palmitic acid, oleic acid, rinoleic acid, and salts thereof, alkylarylsulfonic acid salts, sulfuric acid esters of higher alcohols and alkyl sulfosuccinates; cationic emulsifying agent such as trimethyl ammonium chloride, dialkylammonium chloride, benzylammonium salt, and quaternary ammonium salts, copolymerizable emulsifying agents having a double bond such as α,β-unsaturated carboxylic acid sulfoesters, α,β-unsaturated sulfate esters, sulfoalkyl aryl ethers.

The emulsifying agent is used usually in an amount of 0.1 to 9.0 % by weight, and preferably 0.5 to 0.6 % by weight.

In the method of the present invention, polymerization temperature is not limited particularly so far as it is higher than the melting point of aqueous medium used. From a viewpoint of stability of polymerization reaction, it is preferred to perform the reaction at a low temperature as low as 40°C or lower. If the polymerization temperature exceeds 40°C, polymerization rate becomes too high and when removal of heat is insufficient, runaway reaction may sometimes occur, which makes it difficult to control the reaction.

In the method of the present invention, auxiliary additives such as molecular weight modifiers, particle diameter adjusting agents, antioxidants, chelating agents, and oxygen trapping agents can be added, if desired. Polymerization pressure, manner of adding monomers, type of polymerization reaction vessel, are not limited particularly.

The molded product consists essentially of a coagulated product of the aforementioned copolymer latex.

The coagulated product can be obtained by coagulating the latex using a known coagulating agent. Upon molding, the latex may be used singly or with one or more other polymer latexes such as natural rubber latex and isoprene rubber latex.

While the solids content of the latex used when molding is not limited particularly and it is usually 20 to 55 % by weight, and preferably 30 to 50 % by weight.

The latex may be blended with vulcanizing agents, vulcanizing accelerators, antioxidants, fillers and thickening agents if desired. Manner of blending is not limited particularly. There can be cited, for example, methods in which generally used kneaders and dispersers such as disper are used.

As the coagulating agent, there can be used, for example, metal salt coagulating agents such as calcium chloride, calcium nitrate, and calcium acetate, acid coagulating agents such as formic agent, and acetic acid, heat sensitive coagulating agents such as polyvinyl methyl ether, and polypropylene glycol.

The coagulating agent may be used as it is or as a solution in water, organic solvents, or mixture of water with an organic solvent. As the organic solvent, there can be used those which can dissolve the coagulating agent such as alcohol and ketone.

In particular, in dip molding, calcium-chloride containing solutions are preferred as a coagulating agent. The use of this coagulating agent gives a dip molded product which has an average film thickness of 0.05 mm or more, and below 0.3 mm, a monodispersibility ratio of film thickness of 8 % or less, and soft drape.

In a solution containing calcium chloride, calcium chloride may be replaced partly by other coagulating agents. When calcium chloride is partly replaced by other coagulating agents, the amount of replacement is below 30 % by weight, and preferably 10 % by weight, of calcium chloride. If the amount of coagulating agents other than calcium chloride exceeds 30 % by weight, no dip molded product can be obtained that has a uniform film thickness.

The concentration of the solution containing a coagulating agent is usually 5 to 70 % by weight. In particular, use of the solution in a concentration of 5 to 40 % by weight can give rise to a dip molding product having an average film thickness of 0.05 mm or more and below 0.3 mm and having a uniform film thickness.

The solution containing a coagulating agent may if desired contain lubricants and fillers. As the lubricant, there can be used nonionic surfactants and anionic surfactants. As the fillers, there can be cited, for example, silica sol, talc, calcium carbonate and magnesium carbonate.

The molded products are not limited by molding method. For example, dip molded products can be molded by an anode method in which a mold is dipped in a solution containing a coagulating agent, and withdrawn therefrom, and then it is subsequently dipped in a latex to have the latex coagulated thereon and withdrawn from the latex, or a Teague method in which a mold is dipped in a latex and withdrawn therefrom and subsequently dipped in a solution containing a coagulating agent to coagulate the latex and withdrawn from the solution. Anode method is preferred in order to obtain dip molded product having an average film thickness of 0.05 mm or more and below 0.3 mm.

After the molding, warm water treatment or heat treatment may be carried out, if desired. Warm water treatment or heat treatment can remove calcium chloride and lubricant. Warm water treatment is performed, for example, by dipping the mold to which latex is coagulated in warm water. Heat treatment is performed, for example, by placing the mold to which latex is coagulated in an oven or by irradiating the mold to which latex is coagulated with infrared rays.

Thus, according to the present invention, a copolymer latex having excellent oil resistance and high mechanical strength and soft drape can be obtained by a method for preparing a carboxyl-modified nitrile/diene copolymer latex having a high content of nitrile, a high molecular weight and a low methyl ethyl ketone insoluble matter is provided. Further, a molded product having high oil resistance and high mechanical strength as well as soft drape can be obtained.

Hereinafter, the present invention will be described in more detail by examples. Unless otherwise indicated specifically, all parts and percentages (%) in the examples are by weight.

Evaluation method for latex is as follows.

### [Molecular Weight]

Copolymer was dissolved in tetrahydrofuran and the resulting solution was examined by gel permeation chromatography (carrier: tetrahydrofuran) using a calibration curve obtained on standard polystyrene.

### [MEK Insoluble Matter]

Latex was cast on a glass plate with a frame, and allowed to stand at 25°C for 4 days to form a film. A predetermined amount (weight W₀) of the film was precisely weighed, and put in a metal cage of 80 mesh. The cage was dipped in methyl ethyl ketone at 20°C for 48 hours. Then the cage was taken out and dried in vacuum at 25°C for 2 days. Thereafter, the residual copolymer which remained undissolved in the cage was precisely weighed to obtain weight W₁. Percentage of W₁ to W₀ was calculated.

### [Mechanical Stability]

According to mechanical stability prescribed by JIS-K6392 measurement was carried out under the conditions of a load of 10 kg, 10 minutes and 100 mesh.

Evaluation method for dip molded products is as follows.

### [Drape]

Test pieces obtained by blanking dip molded product using Dumbbell Variation No. 2 (small type) were stretched at a stretch rate of 200 mm/minute, and tensile strengths when the elongation ratio was 300 % were measured. Smaller values indicate softer drape.

### [Tensile Strength]

Test pieces obtained by blanking dip molded product using Dumbbell Variation No. 2 (small type) were stretched at a stretch rate of 200 mm/minute, and tensile strengths (Tb) and elongation ratio (Tl) just before breakage were measured.

### [Tear Strength]

Test pieces obtained by blanking dip molded product using Dumbbell JIS B type were torn at a tearing rate of 500 mm/minute, and tear strengths just before breakage were measured.

### [Oil Resistance]

Test pieces obtained by blanking dip molded product into disks of 20 mm in diameter were dipped in a predetermined test oil for 48 hours, and then surface areas of the test pieces were measured. Difference in area before and after dipping was divided by the area before dipping. Smaller value (area expansion ratio) indicates increased oil resistance.

### [Film Thickness and Its Monodispersibility Ratio]

Film thickness of a dip molded product was measured for 20 positions, and average and standard deviation were calculated. Film thickness was shown as average value. Monodispersibility ratio of film thickness was expressed as percentage of the standard deviation to the average value.

### [Smoothness of Film Surface]

A dip molded product was cut with a cutter, and the resulting cut surface was observed using an optical microscope. Film surface was evaluated based on the following rating.
o ... No unevenness and smooth.
Δ ... Minute unevenness or edges.
x ... Large unevenness.

### Example 1

In a nitrogen-purged reaction vessel were charged 38.0 parts of acrylonitrile, 59.5 parts of 1,3-butadiene, 2.5 parts of methacrylic acid, 0.3 part of a molecular weight modifier (TDM: t-dodecylmercaptan), 0.1 part of 1,1,3,3-tetramethylbutyl hydroperoxide, 0.008 part of ferric sulfate, 120 parts of soft water, and 6.0 parts of emulsifying agent (Warolato u: product of Toshin Kagaku Co., Ltd.), and stirred for 40 hours at 5°C for polymerization. After completion of polymerization, solids content was adjusted to 45 % to obtain Latex A. Results of evaluation of Latex A are shown in Table 1.

### Example 2 to 10

Latexes B to J having solids content of 45 % were prepared in the same manner as in Example 1 except that in the preparation of Latex A composition of monomer, amount of molecular weight modifier, or polymerization initiator was changed. Results of evaluation of these latexes are shown in Table 1.

### Comparative Example 1

Latex L was obtained in the same manner as in Example 1 except that APS instead of TMB was used as the polymerization initiator.

### Comparative Example 2

Latex M was obtained in the same manner as in Example 1 except that APS instead of TMB was used as the polymerization initiator, and the amount of TDM and polymerization temperature were changed.

### Comparative Example 3

Latex N was obtained in the same manner as in Example 1 except that the amount of TDM was decreased.

### Comparative Examples 4 to 7

Latexes O to R were obtained in the same manner as in Example 1 except that polymerization formula shown in Table 2 was followed.

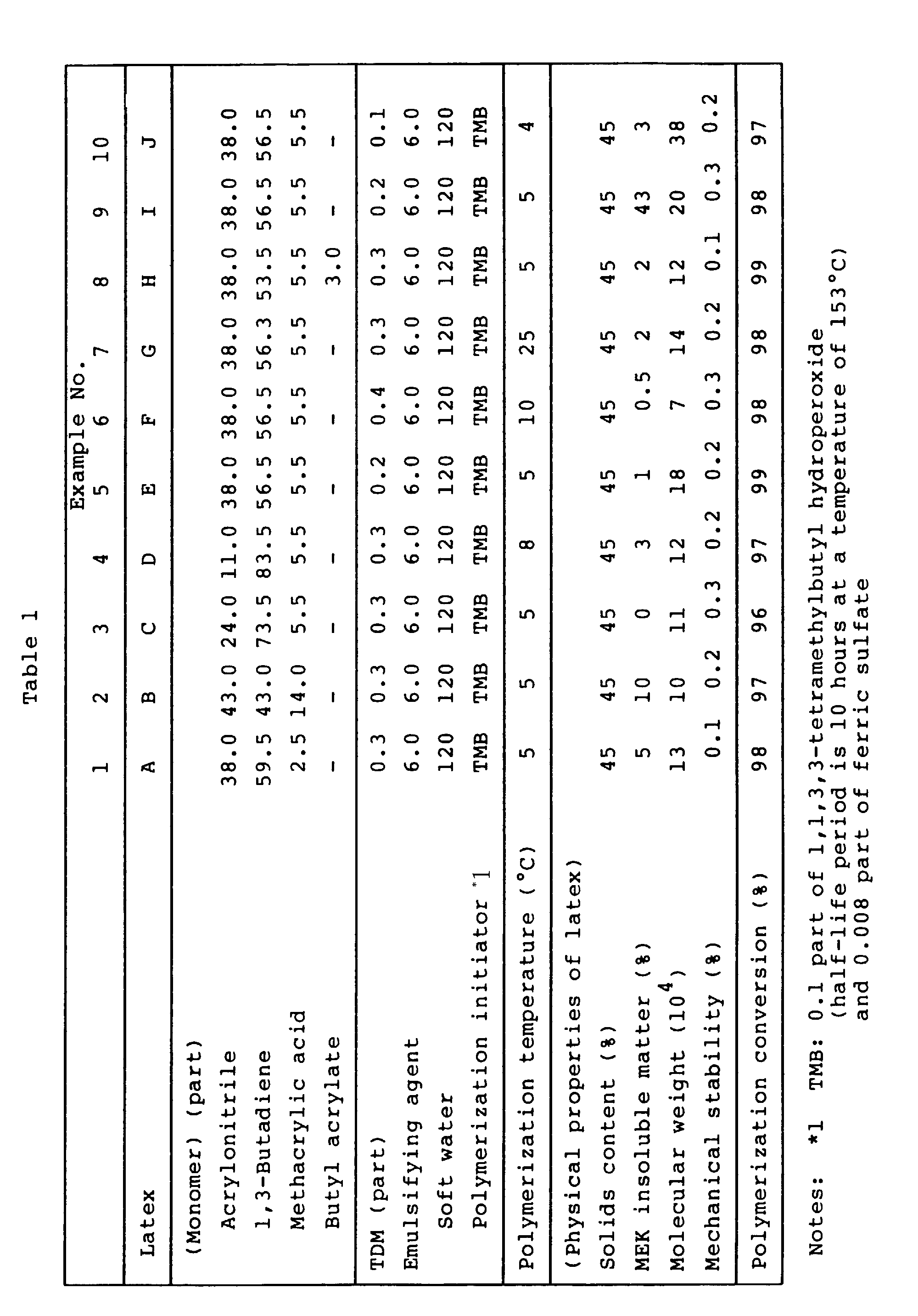

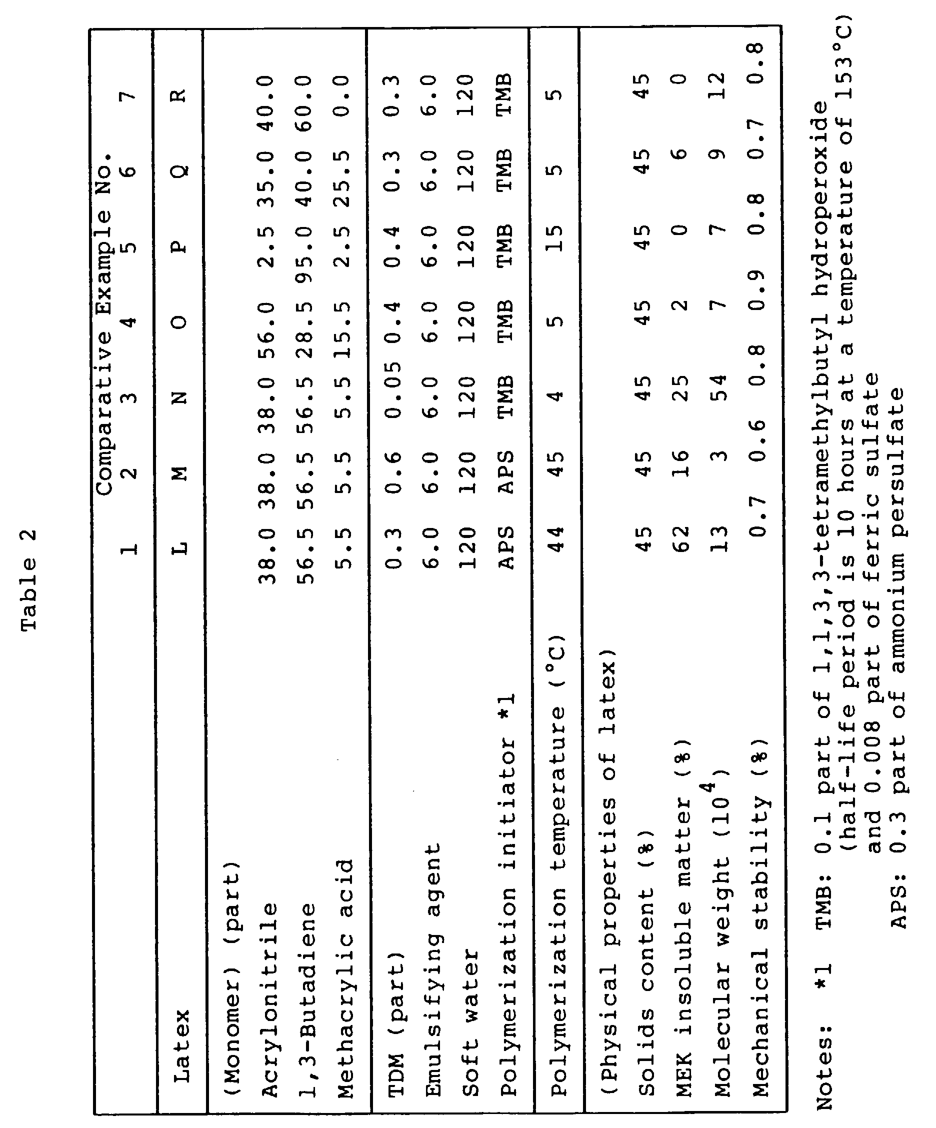

Results of evaluation of Latexes L to R are shown in Table 2.

From the results shown in Tables 1 and 2 above, it can be seen that when emulsion polymerization is performed using ammonium persulfate as polymerization initiator, latexes of copolymers having low molecular weights are obtained or those of copolymers containing a large amount of methyl ethyl ketone insoluble matter were obtained.

On the other hand, it is understood that emulsion polymerization performed using a polymerization initiator consisting of a peroxide whose decomposition temperature giving a half-life period of 10 hours is 100°C or higher can give rise to latexes having a high content of nitrile, a high molecular weight, and a low content of methyl ethyl ketone insoluble matter.

### Example 11

To 220 parts of Latex A (solids content: 45 %) obtained in Example 1 was added 17 parts of a vulcanizing agent solution having a solids content of 50 % and prepared by mixing 0.5 part of sulfur, 5.0 parts of zinc oxide, 3.0 parts of titanium oxide, 0.2 part of 10 % ammonia casein, and 8.3 parts of water to obtain a latex for molding.

On the other hand, a glove mold was dipped for 1 minute in a coagulating agent solution having a solids content of 66 % and prepared by mixing 65 parts of calcium nitrate, 1 part of a nonionic emulsifying agent (Emulgen-810: Kao Co., Ltd.), and 34 parts of water. After taking out from the solution, the mold was dried at 20°C for 3 minutes to have the coagulating agent adhered to the glove mold.

Then the glove mold to which the coagulating agent adhered was dipped in the aforementioned latex for molding for 6 minutes. After taking out from the latex, the glove mold was dried at 20°C for 3 minutes. Next, the glove mold was dipped in warm water at 35°C for 6 minutes. After taking out from the water, the glove mold was heated at 80°C for 20 minutes and then at 130°C for 20 minutes to form a solid film on the surface of the glove mold. Finally, the solid film was peeled off from the glove mold to obtain a dip molded product in the form of a glove. Results of evaluation of the dip molded product thus obtained are shown in Table 3.

### Examples 12 to 20

Dip molded products were obtained in the same manner as in Example 12 except that Latex A was replaced by one of Latexes B to J. Results of evaluation of the dip molded products are shown in Table 3.

### Comparative Examples 8 to 14

Dip molded products were prepared in the same manner as in Example 12 except that Latex A was replaced by one of Latexes L to R. Results of evaluation of the dip molded products thus obtained are shown in Table 4.

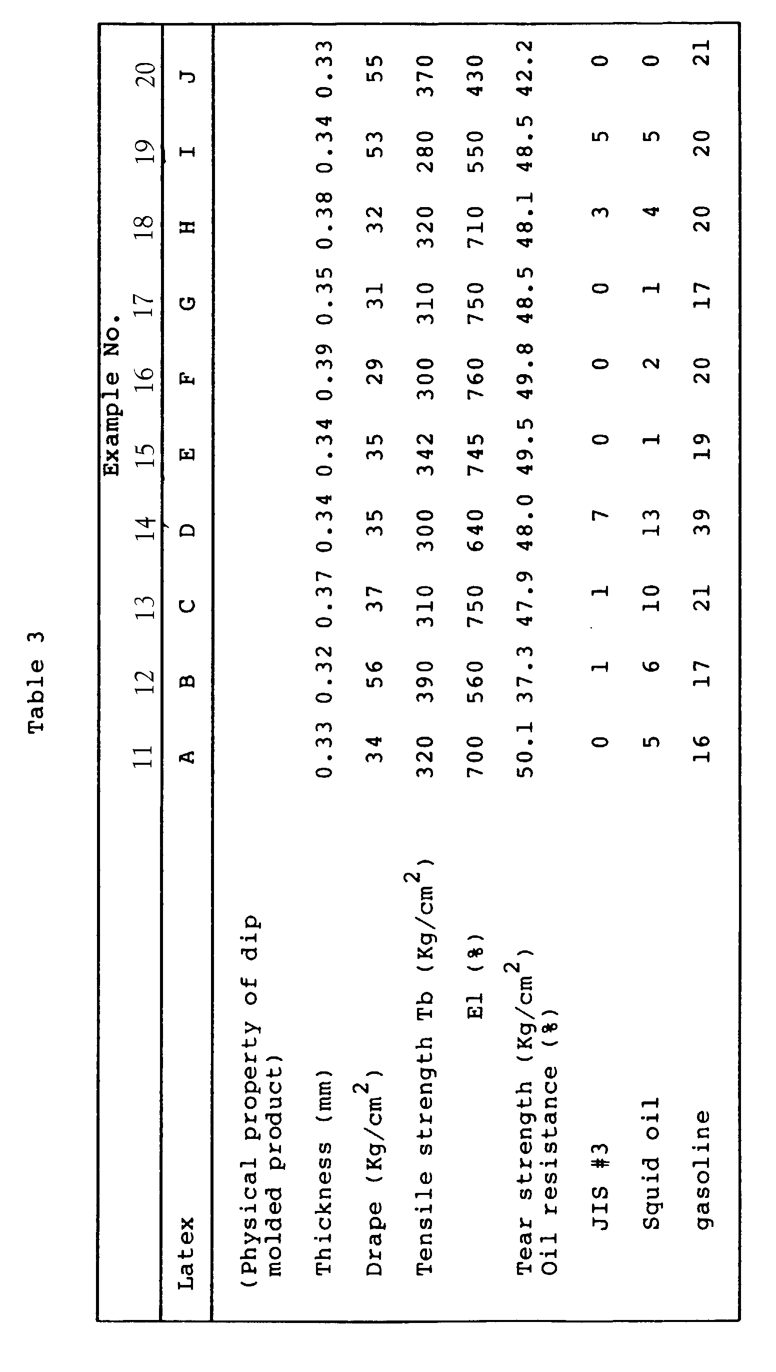

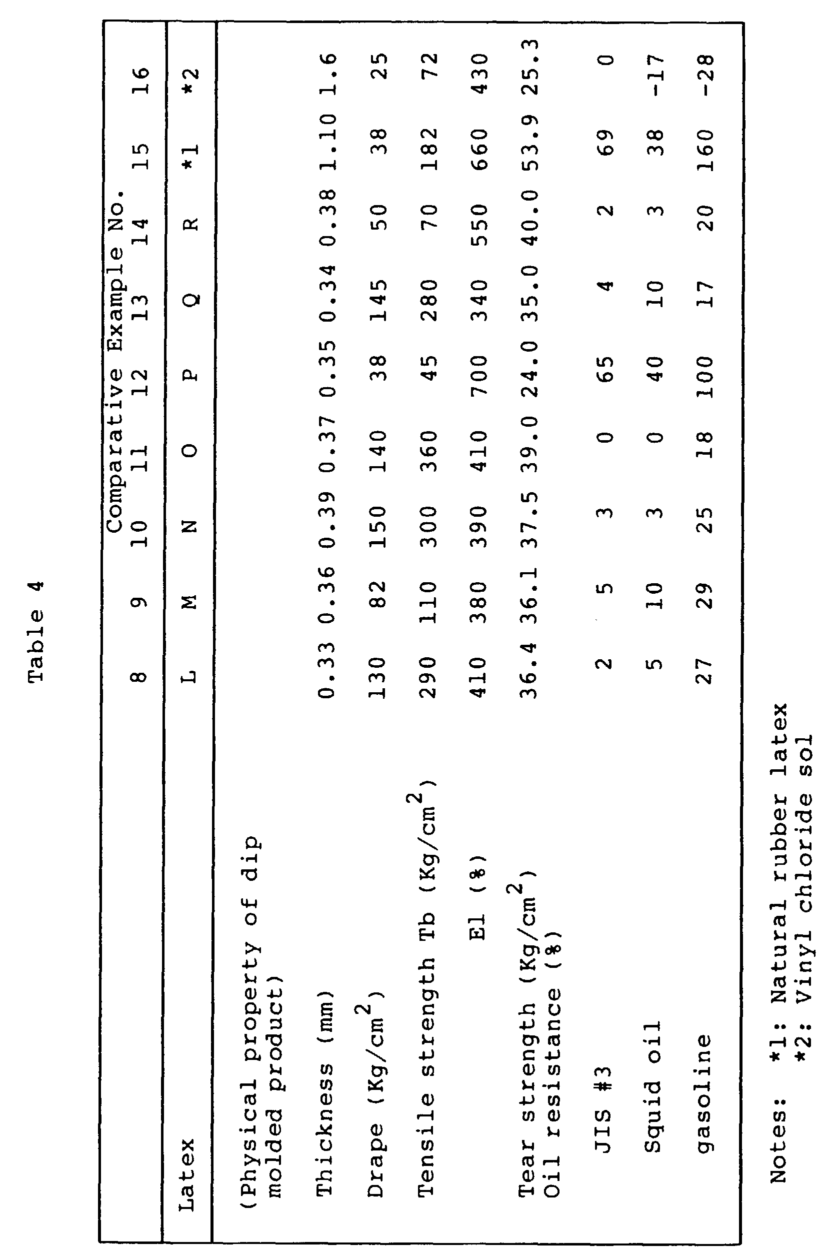

### Comparative Example 15

Dip molded products were prepared in the same manner as in Example 12 except that Latex A was replaced by natural rubber latex. Results of evaluation of the dip molded product thus obtained are shown in Table 4.

### Comparative Example 16

Dip molded products were prepared in the same manner as in Example 12 except that Latex A was replaced by vinyl chloride sol. Results of evaluation of the dip molded product thus obtained are shown in Table 4.

From the results shown in Tables 3 and 4, it can be seen that the dip molded product obtained from Latex P containing the ethylenically unsaturated nitrile monomer in an amount of below 9 % by weight based on the weight of total monomers has a poor oil resistance, and low tensile strength and low tear strength while the dip molded product obtained from Latex O which contains the ethylenically unsaturated nitrile monomer in an amount of above 50 % by weight has a hard drape.

Also, it can be seen that the dip molded product obtained from Latex R containing the ethylenically unsaturated acid monomer in an amount of below 0.1 % by weight based on the weight of total monomers has a low tensile strength while the dip molded product obtained from Latex Q which contains the ethylenically unsaturated acid monomer in an amount of above 20 % by weight has a hard drape and a low tear strength.

Further, it is understood that the dip molded product obtained from Latex L containing the methyl ethyl ketone insoluble matter in an amount of above 50 % by weight based on the weight of total monomers has a hard drape.

It is apparent that the dip molded product obtained from Latex N which has a molecular weight above 500,000 has a hard drape while the dip molded product obtained from Latex M which has a molecular weight below 50,000 has a low tensile strength.

The dip molded products obtained from the conventional natural rubber latex or vinyl chloride sol have poor oil resistances and low tensile strengths.

In contrast thereto, it is understood that the dip molded products obtained from the latexes of the present invention are excellent in oil resistance, and have high mechanical strengths such as tensile strength and tear strength as well as soft drape.

### Examples 21 to 24

Dip molded products were obtained in the same manner as in Example 12 except that the coagulating agent solution was replaced by one of formulae shown in Table 5. Results of evaluation of the dip molded products are shown in Table 5.

From the results shown in Table 5, it will be understood that coagulation dip molding a latex using a coagulating solution containing calcium chloride can give rise to a dip molded product having a uniform film thickness and a soft drape even when the average film thickness is below 0.3 mm.

**Table 5**

| | Example No. | | | |
|---|---|---|---|---|
| | 21 | 22 | 23 | 24 |
| Latex | A | C | D | A |
| (Coagulating solution) (part) | | | | |
| Water | 79 | 86 | 79 | 79 |
| Emulgen-810 | 1 | 1 | 1 | 1 |
| Calcium chloride | 20 | 13 | 20 | - |
| Calcium nitrate | - | - | - | 20 |

| (Physical property of dip molded product) | | | | |
|---|---|---|---|---|
| Average film thickness (mm) | 0.21 | 0.12 | 0.19 | 0.22 |
| Film thickness monodispersibility ratio (%) | 3.9 | 6.2 | 6.9 | 13.7 |
| Smoothness of film surface | o | o | o | Δ |
| Strength (Kg/cm²) | 340 | 350 | 280 | 350 |
| Drape (Kg/cm²) | 34 | 49 | 40 | 41 |
| Notes: o ... No unevenness and smooth. Δ ... Minute unevenness or edges. x ... Large unevenness. | | | | |

## Claims

1. A method for preparing a copolymer latex, comprising the step of:
emulsion polymerizing 30 to 90 % by weight of a conjugated diene monomer, 9 to 50 % by weight of an ethylenically unsaturated nitrile monomer, 0.1 to 20 % by weight of an ethylenically unsaturated acid monomer, and 0 to 20 % by weight of another ethylenically unsaturated monomer copolymerizable therewith using 1,1,3,3-tetramethylbutyl hydroperoxide and a reducing agent.

2. The method for preparing a copolymer latex as claimed in claim 1, wherein said emulsion polymerization is performed at a temperature of 40°C or lower.

3. The method for preparing a copolymer latex as claimed in claim 1, wherein said ethylenically unsaturated nitrile monomer unit is present in an amount of 30 to 45 % by weight.

4. The method for preparing a copolymer latex as claimed in anyone of the claims 1 through 3, wherein said copolymer latex has a polystyrene-converted weight average molecular weight of 50,000 to 500,000 and contains 45 % or less of a methyl ethyl ketone insoluble matter.

5. The method for preparing a copolymer latex as claimed in claim 4, wherein said methyl ethyl ketone insoluble matter is present in an amount of 10 or less.

## Patentansprüche

1. Verfahren zur Herstellung eines Copolymer-Latex, umfassend die Stufe:
der Emulsionspolymerisation von 30 bis 90 Gew.-% eines konjugierten Dienmonomeren, 9 bis 50 Gew.-% eines ethylenisch ungesättigten Nitrilmonomeren, 0,1 bis 20 Gew.-% eines ethylenisch ungesättigten Säure-Monomeren und 0 bis 20 Gew.-% eines weiteren, damit copolymerisierbaren ethylenisch ungesättigten Monomeren unter Verwendung von 1,1,3,3-Tetramethylbutylhydroperoxid und einem Reduktionsmittel.

2. Verfahren zur Herstellung eines Copolymer-Latex nach Anspruch 1, dadurch **gekennzeichnet,** daß die Emulsionspolymerisation bei einer Temperatur von 40°C oder darunter durchgeführt wird.

3. Verfahren zur Herstellung eines Copolymer-Latex nach Anspruch 1, dadurch **gekennzeichnet,** daß die ethylenisch ungesättigte Nitrilmonomer-Einheit in einer Menge von 30 bis 45 Gew.-% vorliegt.

4. Verfahren zur Herstellung eines Copolymer-Latex nach Anspruch 1 bis 3, dadurch **gekennzeichnet,** daß der Copolymer-Latex ein Polystyrol-konvertiertes durchschnittliches Molekulargewicht von 50.000 bis 500.000 aufweist und 45% oder weniger Methylethylketon-unlösliche Bestandteile aufweist.

5. Verfahren zur Herstellung eines Copolymer-Latex nach Anspruch 4, dadurch **gekennzeichnet,** daß die Methylethylketon-unlöslichen Bestandteile in einer Menge von 10 oder weniger vorhanden sind.

## Revendications

1. Méthode de préparation d'un latex copolymère comprenant les étapes de :
polymérisation en émulsion de 30 à 90 % en poids d'un monomère diénique conjugué, de 9 à 50 % en poids d'un monomère de nitrile à insaturation éthylénique, de 0,1 à 20 % en poids d'un monomère d'acide à insaturation éthylénique et de 0 à 20 % en poids d'un autre monomère à insaturation éthylénique copolymérisable avec ceux-ci, en utilisant l'hydroperoxyde de 1,1,3,3-tétraméthyl-butyle et un agent réducteur.

2. Méthode de préparation d'un latex copolymère selon la revendication 1, où ladite polymérisation en émulsion est effectuée à une température de 40 °C ou inférieure.

3. Méthode de préparation d'un latex copolymère selon la revendication 1, où ledit motif monomère de nitrile à insaturation éthylénique est présent dans une quantité de 30 à 45 % en poids.

4. Méthode de préparation d'un latex copolymère selon l'une quelconque des revendications 1 à 3, où le latex copolymère a une masse molaire moyenne en poids convertie au polystyrène de 50 000 à 500 000 et une teneur de 45 % ou moins en extrait sec insoluble dans la méthyléthylcétone.

5. Méthode de préparation d'un latex copolymère selon la revendication 4, où ledit extrait sec insoluble dans la méthyléthylcétone est présent une quantité de 10 % ou moins.
